(19)

Europäisches Patentamt

European Patent Office

Office européen des brevets

(11) **EP 4 644 170 A1**

(12) **EUROPEAN PATENT APPLICATION**
published in accordance with Art. 153(4) EPC

(43) Date of publication:
05.11.2025 Bulletin 2025/45

(21) Application number: 24919147.9

(22) Date of filing: 05.02.2024

(51) International Patent Classification (IPC):
*B60L 58/12* (2019.01)     *B60W 40/00* (2006.01)
*G01R 31/382* (2019.01)

(86) International application number:
PCT/CN2024/076063

(87) International publication number:
WO 2025/161046 (07.08.2025 Gazette 2025/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.01.2024 CN 202410147428

(71) Applicant: Chongqing Changan Automobile Co.,
Ltd.
Chongqing 400023 (CN)

(72) Inventors:
• HU, Song
Chongqing 400023 (CN)
• HU, Xianli
Chongqing 400023 (CN)
• FU, Xuehai
Chongqing 400023 (CN)
• CHEN, Xuping
Chongqing 400023 (CN)

(74) Representative: Keller Schneider
Patent- und Markenanwälte AG
Eigerstrasse 2
Postfach
3000 Bern 14 (CH)

(54) **METHOD AND APPARATUS FOR DETERMINING TARGET SOC OF POWER BATTERY OF HYBRID VEHICLE**

(57) The present application relates to a method for determining a target SOC of a power battery of a hybrid vehicle. The method comprises: acquiring current associated information, and determining a current lower-limit state of charge (SOC) and a current upper-limit SOC according to the current associated information, wherein the current associated information comprises at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (SOH) of the power battery; and determining a first target SOC of the power battery according to a current actual SOC, the current lower-limit SOC, and the current upper-limit SOC of the power battery.

Acquire current associated information, and determine a current lower-limit SOC and a current upper-limit SOC according to the current associated information — S101

Determine a first target SOC of the power battery of the target hybrid vehicle according to the current actual SOC of the power battery of the target hybrid vehicle, the current lower-limit SOC of the target hybrid vehicle, and the current upper-limit SOC of the target hybrid vehicle — S102

Fig. 1

# Description

## Technical Field

The present application relates to the field of vehicles, in particular to a method and apparatus for determining a target SOC of a power battery of a hybrid vehicle, a hybrid vehicle, and a computer-readable storage medium.

## Background

Hybrid vehicles are equipped with two power sources: a power battery and an engine. The quality of energy management of the power battery directly affects power, driving experience, etc., and is a key to determining the user experience. The state of charge (SOC) of the power battery is an important parameter of the power battery. For the vehicle control unit, determining the target SOC of the power battery is the core of energy management of the power battery. The start and stop of the engine and the determination of the engine torque all depend on the target SOC of the power battery of the hybrid vehicle. How to accurately determine the target SOC of the power battery of the hybrid vehicle has become a problem to be solved.

## Summary of the Invention

In view of this, the present application provides a method and apparatus for determining a target SOC of the power battery of a hybrid vehicle, a hybrid vehicle, and a computer-readable storage medium, to solve the problem of how to accurately determine the target SOC of the power battery of a hybrid vehicle.

In a first aspect, embodiments of the present application provide a method for determining the target SOC of the power battery of a hybrid vehicle. The method includes:

acquiring current associated information, and determining a current lower-limit state of charge (SOC) and a current upper-limit SOC according to the current associated information, wherein the current associated information includes at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (SOH) of the power battery; and

determining a first target SOC of the power battery according to a current actual SOC, the current lower-limit SOC, and the current upper-limit SOC of the power battery.

In a possible embodiment, the step of determining a current lower-limit SOC and a current upper-limit SOC according to the current associated information includes:

determining a base value of the current lower-limit SOC and a base value of the current upper-limit SOC according to the current ambient temperature and the current battery temperature;

determining a correction value of the current lower-limit SOC and a correction value of the current upper-limit SOC according to the current altitude, the current slope gradient, and the current SOH; and

determining the current lower-limit SOC and the current upper-limit SOC according to the base value of the current lower-limit SOC, the base value of the current upper-limit SOC, the correction value of the current lower-limit SOC, and the correction value of the current upper-limit SOC.

In a possible embodiment, the step of determining a base value of the current lower-limit SOC and a base value of the current upper-limit SOC according to the current ambient temperature and the current battery temperature includes:

determining a minimum value between the current ambient temperature and the current battery temperature;

determining the base value of the current lower-limit SOC according to the minimum value and a first table, wherein the first table includes base values of the lower-limit SOC corresponding to each of a plurality of preset temperatures; and

determining the base value of the current upper-limit SOC according to the minimum value and a second table, wherein the second table includes base values of the upper-limit SOC corresponding to each of a plurality of preset temperatures.

In a possible embodiment, the step of determining a correction value of the current lower-limit SOC and a correction value of the current upper-limit SOC according to the current altitude, the current slope gradient, and the current SOH includes:

looking up a third table for a first correction value of lower-limit SOC corresponding to the current altitude and the current slope gradient, wherein the third table includes first correction values of the lower-limit SOC corresponding to each of a plurality of preset combinations of preset altitude and preset slope gradient;

looking up a fourth table for a second correction value of lower-limit SOC corresponding to the current SOH, wherein the fourth table includes second correction values of lower-limit SOC corresponding to each of a plurality of preset SOHs;

determining the correction value of the current lower-limit SOC according to the first correction value of lower-limit SOC corresponding to the current altitude and the current slope gradient and the second correction value of lower-limit SOC corresponding to the current SOH; and

looking up a fifth table for a correction value of the upper-limit SOC corresponding to the current SOH, and determining the correction value of the current upper-limit SOC to be the correction value of upper-limit SOC corresponding to the current SOH , wherein the fifth table includes correction values of the upper-limit SOC corresponding to each of a plurality of preset SOHs.

In a possible embodiment, the step of determining the current lower-limit SOC and the current upper-limit SOC according to the base value of the current lower-limit SOC, the base value of the current upper-limit SOC, the correction value of the current lower-limit SOC, and the correction value of the current upper-limit SOC includes:

determining the current lower-limit SOC to be the sum of the base value of the current lower-limit SOC and the correction value of the current lower-limit SOC; and

determining the current upper-limit SOC to be the sum of the base value of the current upper-limit SOC and the correction value of the current upper-limit SOC.

In a possible embodiment, the step of determining a first target SOC of the power battery according to a current actual SOC, the current lower-limit SOC, and the current upper-limit SOC of the power battery includes:

when the current actual SOC is greater than or equal to the current upper-limit SOC, determining the first target SOC to be the current upper-limit SOC;

when the current actual SOC is less than or equal to the current lower-limit SOC, determining the first target SOC to be the current lower-limit SOC; and

when the current actual SOC is greater than the current lower-limit SOC and the current actual SOC is less than the current upper-limit SOC, determining an SOC variation rate corresponding to the current actual SOC according to a difference value corresponding to the current actual SOC and a real SOC variation amount corresponding to the current actual SOC, and determining the first target SOC according to the SOC variation rate, wherein the difference value is a difference between the current actual SOC and an actual SOC of the power battery acquired last time, and the real SOC variation amount is determined according to the voltage and current of the power battery and the capacity of the power battery within a period between the time when the current actual SOC is acquired and the time when the actual SOC of the power battery was acquired last time.

In a possible embodiment, the step of determining the first target SOC according to the SOC variation rate includes:

when the current actual SOC is greater than the actual SOC of the power battery acquired last time, determining the first target SOC to be equal to a second target SOC, wherein the second target SOC is a target SOC of the power battery determined last time;

when the current actual SOC is less than the actual SOC of the power battery acquired last time and the SOC variation rate is less than an SOC variation rate threshold, determining the first target SOC to be equal to the current actual SOC; and

when the current actual SOC is less than the actual SOC of the power battery acquired last time and the SOC variation rate is greater than or equal to the SOC variation rate threshold, determining the first target SOC according to a current discharge power boundary of the power battery and a discharge power boundary of the power battery acquired last time.

In a possible embodiment, the step of determining the first target SOC according to a current discharge power boundary of the power battery and a discharge power boundary of the power battery acquired last time includes:

when the current discharge power boundary is the same as the discharge power boundary of the power battery acquired last time, determining the first target SOC to be equal to the current actual SOC; and

when the current discharge power boundary is less than the discharge power boundary of the power battery acquired last time, determining the first target SOC according to the second target SOC and the current actual SOC.

In a second aspect, the embodiments of the present application provide an apparatus for determining a target SOC of a power battery of a hybrid vehicle, wherein the apparatus includes:

an acquisition module configured to acquire current associated information and determine a current lower-limit state of charge (SOC) and a current upper-limit SOC according to the current associated information, wherein the current associated information includes at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (SOH) of the power battery; and

a determination module configured to determine a first target SOC of the power battery according to a current actual SOC, the current lower-limit SOC, and the current upper-limit SOC of the power battery.

In a possible embodiment, the acquisition module is further configured to: determine a base value of the current lower-limit SOC and a base value of the current upper-limit SOC according to the current ambient temperature and the current battery temperature; determine a correction value of the current lower-limit SOC and a correction value of the current upper-limit SOC according to the current altitude, the current slope gradient, and the current SOH; and determine the current lower-limit SOC and the current upper-limit SOC according to the base value of the current lower-limit SOC, the base value of the current upper-limit SOC, the correction value of the current lower-limit SOC, and the correction value of the current upper-limit SOC.

In a possible embodiment, the acquisition module is further configured to: determine a minimum value between the current ambient temperature and the current battery temperature; determine the base value of the current lower-limit SOC according to the minimum value and a first table, wherein the first table includes base values of the lower-limit SOC corresponding to each of a plurality of preset temperatures; and determine the base value of the current upper-limit SOC according to the minimum value and a second table, wherein the second table includes base values of the upper-limit SOC corresponding to each of a plurality of preset temperatures.

In a possible embodiment, the acquisition module is further configured to: look up a third table for a first correction value of lower-limit SOC corresponding to the current altitude and the current slope gradient, wherein the third table includes first correction values of lower-limit SOC corresponding to each of a plurality of preset combinations of preset altitude and preset slope gradient; look up a fourth table for a second correction value of lower-limit SOC corresponding to the current SOH, wherein the fourth table includes second correction values of lower-limit SOC corresponding to each of a plurality of preset SOHs; determine the correction value of the current lower-limit SOC according to the first correction value of lower-limit SOC corresponding to the current altitude and the current slope gradient and the second correction value of lower-limit SOC corresponding to the current SOH; and look up a fifth table for a correction value of upper-limit SOC corresponding to the current SOH, and determine the correction value of the current upper-limit SOC to be the correction value of upper-limit SOC corresponding to the current SOH, wherein the fifth table includes correction values of the upper-limit SOC corresponding to each of a plurality of preset SOHs.

In a possible embodiment, the acquisition module is further configured to: determine the current lower-limit SOC to be the sum of the base value of the current lower-limit SOC and the correction value of the current lower-limit SOC; and determine the current upper-limit SOC to be the sum of the base value of the current upper-limit SOC and the correction value of the current upper-limit SOC.

In a possible embodiment, the determination module is further configured to: when the current actual SOC is greater than or equal to the current upper-limit SOC, determine the first target SOC to be the current upper-limit SOC; when the current actual SOC is less than or equal to the current lower-limit SOC, determine the first target SOC to be the current lower-limit SOC; and when the current actual SOC is greater than the current lower-limit SOC and the current actual SOC is less than the current upper-limit SOC, determine an SOC variation rate corresponding to the current actual SOC according to a difference value corresponding to the current actual SOC and a real SOC variation amount corresponding to the current actual SOC, and determine the first target SOC according to the SOC variation rate, wherein the difference value is a difference between the current actual SOC and an actual SOC of the power battery acquired last time, and the real SOC variation amount is determined according to the voltage and current of the power battery and the capacity of the power battery within a period between the time when the current actual SOC is acquired and the time when the actual SOC of the power battery was acquired last time.

In a possible embodiment, the determination module is further configured to: when the current actual SOC is greater than the actual SOC of the power battery acquired last time, determine the first target SOC to be equal to a second target SOC, wherein the second target SOC is a target SOC of the power battery determined last time; when the current actual SOC is less than the actual SOC of the power battery acquired last time and the SOC variation rate is less than an SOC variation rate threshold, determine the first target SOC to be equal to the current actual SOC; and when the current actual SOC is less than the actual SOC of the power battery acquired last time and the SOC variation rate is greater than or equal to the SOC variation rate threshold, determine the first target SOC according to a current discharge power boundary of the power battery and a discharge power boundary of the power battery acquired last time.

In a possible embodiment, the determination module may be further configured to: when the current discharge power boundary is the same as the discharge power boundary of the power battery acquired last time, determine the first target SOC to be equal to the current actual SOC; and when the current discharge power boundary is less than the discharge power boundary of the power battery acquired last time, determine the first target SOC according to the second target SOC and the current actual SOC.

In a third aspect, embodiments of the present application provide a hybrid vehicle, and the hybrid vehicle includes a memory and a processor, wherein the memory and the processor are communicatively connected with each other, computer instructions are stored in the memory, and the processor is configured to execute the method of the above first aspect or any corresponding implementation manner by executing the computer instructions.

In a fourth aspect, embodiments of the present application provide a computer-readable storage medium. The computer-readable storage medium has computer instructions stored therein, and the computer instructions are configured to enable a computer to execute the method of the above first aspect or any corresponding implementation manner.

Beneficial effects of the present application are as follows:

In the technical solution provided in the present application, the current lower-limit SOC and the current upper-limit SOC are determined according to at least part of the following items: the current altitude of a location where the target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (State-of-Health, abbreviated as SOH) of the power battery. According to the current actual SOC, the current lower-limit SOC, and the current upper-limit SOC of the power battery, the first target SOC of the power battery is determined. The first target SOC is more accurately determined when a plurality of situations are considered, such as when the current actual SOC is greater than or equal to the current upper-limit SOC, when the current actual SOC is less than or equal to the current lower-limit SOC, when the current actual SOC is greater than the current lower-limit SOC, and when the current actual SOC is less than the current upper-limit SOC.

**Brief Description of the Drawings**

Fig. 1 is a flow diagram of a method for determining a target SOC of a power battery of a hybrid vehicle according to an embodiment of the present application;

Fig. 2 is a flow diagram of another method for determining a target SOC of a power battery of a hybrid vehicle according to an embodiment of the present application;

Fig. 3 is a structural block diagram of an apparatus for determining a target SOC of a power battery of a hybrid vehicle according to an embodiment of the present application;

Fig. 4 is a schematic diagram of a hardware structure of a hybrid vehicle according to an embodiment of the present application.

**Detailed Description**

Implementation manners of the present application will be described below with reference to the accompanying drawings and preferred embodiments. Those skilled in the art can easily understand other advantages and effects of the present application from the contents disclosed in this specification. The present application can also be implemented or applied through other different specific implementation manners, and various details in this specification can also be modified or changed based on different viewpoints and applications without departing from the spirit of the present application. It should be understood that the preferred embodiments are only for the purpose of illustrating the present application, rather than limiting the protection scope of the present application.

It should be noted that the diagrams provided in the following embodiments only illustrate the basic concept of the present application in a schematic manner. Therefore, only the components related to the present application are shown in the diagrams, rather than being drawn according to the number, shape, and size of the components in actual implementation. During actual implementation, the types, quantities, and proportions of components can be arbitrarily changed, and the component layout may also be more complex.

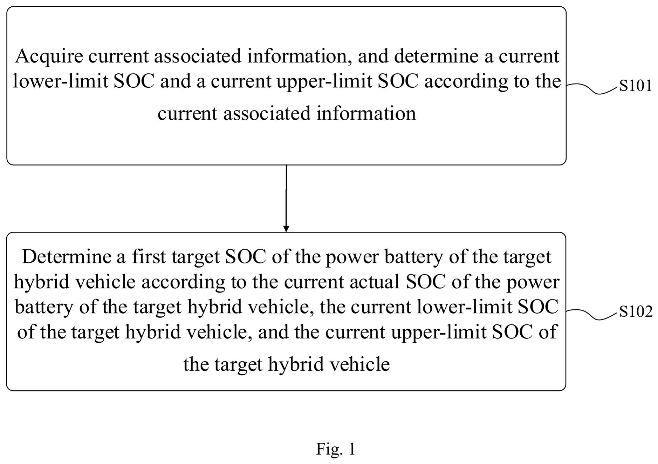

Please refer to Fig. 1 which shows a flow diagram of a method for determining a target SOC of a power battery of a hybrid vehicle according to an embodiment of the present application.

During an energy management process of the power battery of the target hybrid vehicle, step S101 can be performed periodically. Within a period between the time when step S101 is performed for the t-th time and the time when step S101 is performed for the (t-1)-th time, an actual SOC of the power battery of the target hybrid vehicle can be acquired periodically. The actual SOC of the power battery of the target hybrid vehicle can be calculated by a unit configured to calculate parameters of the battery in the target hybrid vehicle. As an example, the actual SOC of the power battery of the target hybrid vehicle is acquired periodically from the unit configured to calculate parameters of the battery in the target hybrid vehicle. As another example, the unit configured to calculate parameters of the battery in the target hybrid vehicle periodically sends the actual SOC of the power battery to the bus on the target hybrid vehicle, such as the controller area network (CAN for short) bus, and the actual SOC of the power battery is acquired from the bus on the target hybrid vehicle.

Within a period between the time when step S101 is performed for the t-th time and the time when step S101 is performed for the (t-1)-th time, each time an actual SOC of the power battery of the target hybrid vehicle is acquired, the acquired actual SOC is taken as the current actual SOC, and step S102 is performed. Therefore, within a period between the time when step S101 is performed for the t-th time and the time when step S101 is performed for the (t-1)-th time, step S102 is performed periodically, and the target SOC is determined periodically. Wherein t is an integer greater than 1. The second target SOC is defined relative to the first target SOC. If the first target SOC is the target SOC determined during a process of determining the target SOC for the t-th time, the second target SOC may refer to the target SOC determined during a process of determining the target SOC for the (t-1)-th time, wherein t is an integer greater than 1. If the first target SOC is the target SOC determined during the process of determining the target SOC for the first time, the second target SOC may refer to a preset initial target SOC.

In the embodiment of the present application, the current altitude of a location where the target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current SOH of the power battery can all be acquired from the corresponding sensors on the target hybrid vehicle or the bus on the target hybrid vehicle, such as the CAN bus.

Step S101, acquiring current associated information, and determining a current lower-limit SOC and a current upper-limit SOC according to the current associated information.

The current associated information includes at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (SOH) of the power battery.

The current associated information includes at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current SOH of the power battery of the target hybrid vehicle.

The target hybrid vehicle can be any hybrid vehicle. The altitude of the location where the target hybrid vehicle is currently located is called the current altitude. The gradient of the road surface where the target hybrid vehicle is currently located is called the current slope gradient. The temperature of the environment where the target hybrid vehicle is currently located is called the current ambient temperature.

As an example, the current associated information includes: the current altitude of the location where the target hybrid vehicle is currently located, the current slope gradient of the road surface where the target hybrid vehicle is currently located, the current ambient temperature of the environment where the target hybrid vehicle is currently located, the current battery temperature of the power battery of the target hybrid vehicle, and the current SOH of the power battery of the target hybrid vehicle.

As another example, the current associated information includes: the current altitude of the location where the target hybrid vehicle is currently located, the current ambient temperature of the environment where the target hybrid vehicle is currently located, the current battery temperature of the power battery of the target hybrid vehicle, and the current SOH of the power battery of the target hybrid vehicle.

As another example, the current associated information includes: the current slope gradient of the road surface where the target hybrid vehicle is currently located, the current ambient temperature of the environment where the target hybrid vehicle is currently located, the current battery temperature of the power battery of the target hybrid vehicle, and the current SOH of the power battery of the target hybrid vehicle.

In step S101, the current lower-limit SOC and the current upper-limit SOC are determined according to the current associated information.

The current upper-limit SOC is greater than the current lower-limit SOC.

In a possible embodiment, to determine the current lower-limit SOC and the current upper-limit SOC according to the current associated information, a preset table can be constructed in advance. The preset table includes: a plurality of preset associated information and the preset SOC combination corresponding to each preset associated information.

The preset associated information includes at least part of the following items: preset altitude, preset slope gradient, preset ambient temperature, preset battery temperature, and preset SOH.

It should be noted that the types of information items included in the current associated information are the same as the types of information items included in the preset associated information.

For preset associated information, the preset SOC combination corresponding to the preset associated information includes: a preset lower-limit SOC corresponding to the preset associated information and the preset upper-limit SOC corresponding to the preset associated information.

Wherein the preset upper-limit SOC corresponding to the preset associated information is greater than the preset lower-limit SOC corresponding to the preset associated information.

When the current lower-limit SOC and the current upper-limit SOC are determined according to the current associated information, the similarity between the current associated information and each preset associated information can be calculated to determine the preset associated information with the highest similarity to the current associated information. The preset associated information with the highest similarity to the current associated information is denoted as preset associated information i, the preset lower-limit SOC corresponding to preset associated information i is taken as the current lower-limit SOC, and the preset upper-limit SOC corresponding to preset associated information i is taken as the current upper-limit SOC.

When the similarity between the current associated information and a preset associated information is calculated, a vector of the current associated information can be generated. Each item in the current associated information corresponds to a component in the vector of the current associated information. Meanwhile, a vector of the preset associated information can be generated. Each item in the preset associated information corresponds to a component in the vector of the preset associated information. In order to calculate the similarity between the current associated information and the preset associated information, the similarity between the vector of the current associated information and the vector of the preset associated information can be calculated, and the similarity between the vector of the current associated information and the vector of the preset associated information is taken as the similarity between the current associated information and the preset associated information.

Step S102: determining a first target SOC of the power battery of the target hybrid vehicle according to the current actual SOC of the power battery of the target hybrid vehicle, the current lower-limit SOC of the target hybrid vehicle, and the current upper-limit SOC of the target hybrid vehicle.

The first target SOC can be provided to the units on the target hybrid vehicle that require the target SOC, such that these units requiring the target SOC can perform relevant operations according to the first target SOC, such as determining the engine torque according to the first target SOC.

When the current actual SOC of the power battery of the target hybrid vehicle is greater than or equal to the current upper-limit SOC, the current upper-limit SOC is determined to be the first target SOC.

When the current actual SOC of the power battery of the target hybrid vehicle is less than or equal to the current lower-limit SOC, the current lower-limit SOC is determined to be the first target SOC.

When the current actual SOC of the power battery of the target hybrid vehicle is greater than the current lower-limit SOC and the current actual SOC is less than the current upper-limit SOC, the difference between the current actual SOC of the power battery of the target hybrid vehicle and the actual SOC of the power battery acquired last time is calculated. The difference between the current actual SOC of the power battery of the target hybrid vehicle and the actual SOC of the power battery acquired last time is defined as the current actual SOC of the power battery minus the actual SOC of the power battery acquired last time.

When the difference between the current actual SOC of the power battery of the target hybrid vehicle and the actual SOC of the power battery acquired last time is greater than or equal to 0, the second target SOC can be determined to be the first target SOC of the power battery. The second target SOC is a target SOC of the power battery determined last time. That is, when the actual SOC of the power battery rises or remains unchanged, the target SOC of the power battery also remains unchanged.

When the difference between the current actual SOC of the power battery of the target hybrid vehicle and the actual SOC of the same power battery acquired last time is less than 0, the current actual SOC of the power battery of the target hybrid vehicle can be determined to be the first target SOC of the power battery. That is, when the actual SOC of the power battery decreases, the target SOC of the power battery follows the current actual SOC of the power battery.

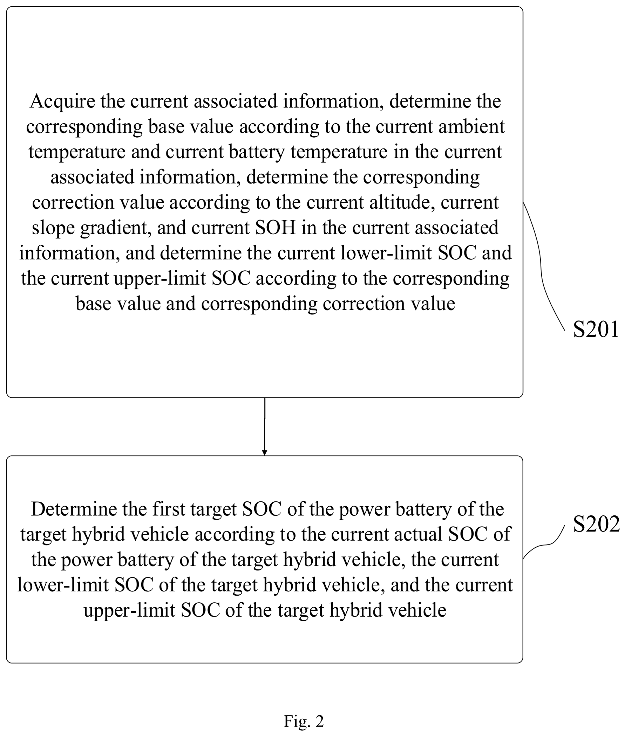

Please refer to Fig. 2 which shows a flow diagram of another method for determining the target SOC of the power battery of a hybrid vehicle according to an embodiment of the present application.

Step S201: acquiring the current associated information, determining the corresponding base value according to the current ambient temperature and current battery temperature in the current associated information, determining the corresponding correction value according to the current altitude, current slope gradient, and current SOH in the current associated information, and determining the current lower-limit SOC and the current upper-limit SOC according to the corresponding base value and corresponding correction value.

The current associated information may include: the current altitude of a location where the target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current SOH of the power battery of the target hybrid vehicle.

Step S201 includes steps S2011 to S2013.

Step S2011: determining a base value of the current lower-limit SOC of the power battery and a base value of the current upper-limit SOC of the power battery according to the current ambient temperature and the current battery temperature.

Step S2011 may include: step S20111, determining a minimum value between the current ambient temperature and the current battery temperature; step S20112, determining the base value of the current lower-limit SOC according to the minimum value and a first table, wherein the first table includes a plurality of preset temperatures and base values of the lower-limit SOC corresponding to each of a plurality of preset temperatures; step S20113, determining the base value of the current upper-limit SOC according to the minimum value and a second table, wherein the second table includes the plurality of preset temperatures and base values of the upper-limit SOC corresponding to each of a plurality of preset temperatures.

The base value of the current upper-limit SOC is greater than the base value of the current lower-limit SOC.

In step S20112, to determine the base value of the current lower-limit SOC, the first preset temperature corresponding to the minimum value in the first table can be determined. The first preset temperature is the preset temperature closest to the minimum value in the first table. The base value of the lower-limit SOC corresponding to the first preset temperature is determined to be the base value of the current lower-limit SOC.

In step S20113, to determine the base value of the current upper-limit SOC, the second preset temperature corresponding to the minimum value in the second table can be determined. Wherein the second preset temperature is the preset temperature in the second table that is closest to the minimum value, and the base value of the upper-limit SOC corresponding to the second preset temperature is determined to be the base value of the current upper-limit SOC.

Step S2012: determining a correction value of the current lower-limit SOC of the power battery and a correction value of the current upper-limit SOC of the power battery according to the current altitude, the current slope gradient, and the current SOH.

Step S2012 may include: step S20121, looking up a third table for a first correction value of the lower-limit SOC corresponding to the current altitude and the current slope gradient, wherein the third table includes first correction values of lower-limit SOC corresponding to each of a plurality of preset combinations of preset altitude and preset slope gradient; step S20122, looking up a fourth table for a second correction value of lower-limit SOC corresponding to the current SOH, wherein the fourth table includes the plurality of preset SOHs and second correction values of lower-limit SOC corresponding to each of the plurality of preset SOHs; step S20123, determining the correction value of the current lower-limit SOC according to the first correction value of lower-limit SOC corresponding to the current altitude and the current slope gradient and the second correction value of lower-limit SOC corresponding to the current SOH; step S20124, looking up a fifth table for a correction value of the upper-limit SOC corresponding to the current SOH, and determining the correction value of the current upper-limit SOC to be the correction value of upper-limit SOC corresponding to the current SOH, wherein the fifth table includes the plurality of preset SOHs and the correction values of the upper-limit SOC corresponding to each of the plurality of preset SOHs.

In step S20121, in order to look up the third table for the first correction value of lower-limit SOC corresponding to the current altitude and the current slope gradient, the current altitude and the current slope gradient can be combined into a current combination. The similarity between the current combination and each preset combination can be calculated, wherein each preset combination belongs to the plurality of preset combinations. The preset combination with the maximum similarity to the current combination is determined. The preset combination with the maximum similarity to the current combination is denoted as a preset combination j, and the first correction value of lower-limit SOC corresponding to the preset combination j is determined to be the first correction value of lower-limit SOC corresponding to the current altitude and the current slope gradient. When the similarity between the current combination and a preset combination is calculated, a vector of the current combination can be generated, wherein each item in the current combination corresponds to a component in the vector of the current combination. At the same time, a vector of the preset combination can be generated, and each item in the preset combination respectively corresponds to a component in the vector of the preset combination. In order to calculate the similarity between the current combination and the preset combination, the similarity between the vector of the current combination and the vector of the preset combination can be calculated, and the similarity between the vector of the current combination and the vector of the preset combination is taken as the similarity between the current combination and the preset combination.

In step S20122, in order to look up the fourth table for the second correction value of lower-limit SOC corresponding to the current SOH, the first preset SOH corresponding to the current SOH in the fourth table can be determined. The first preset SOH is the preset SOH closest to the current SOH in the fourth table. The second correction value of lower-limit SOC corresponding to the first preset SOH is determined to be the second correction value of lower-limit SOC corresponding to the current SOH.

In step S20123, to determine the correction value for the current lower-limit SOC, the sum of the first correction value of lower-limit SOC corresponding to the current altitude and the current slope gradient and the second correction value of lower-limit SOC corresponding to the current SOH can be calculated, and this sum is determined to be the correction value of the current lower-limit SOC.

In step S20124, to determine the correction value of the current upper-limit SOC, the correction value of the upper-limit SOC corresponding to the current SOH can be looked up from the fifth table, and the correction value of the upper-limit SOC corresponding to the current SOH is determined to be the correction value of the current upper-limit SOC. The second preset SOH corresponding to the current SOH in the fifth table can be determined, and the second preset SOH is the preset SOH closest to the current SOH in the fifth table. The correction value of the upper-limit SOC corresponding to the second preset SOH is determined to be the correction value of the upper-limit SOC corresponding to the current SOH.

Step S2013, determining the current lower-limit SOC and the current upper-limit SOC according to the base value of the current lower-limit SOC, the base value of the current upper-limit SOC, the correction value of the current lower-limit SOC, and the correction value of the current upper-limit SOC.

Step S2013 may include: determining the current lower-limit SOC to be the sum of the base value of the current lower-limit SOC and the correction value of the current lower-limit SOC; and determining the current upper-limit SOC to be the sum of the base value of the current upper-limit SOC and the correction value of the current upper-limit SOC.

Step S202: determining the first target SOC of the power battery of the target hybrid vehicle according to the current actual SOC of the power battery of the target hybrid vehicle, the current lower-limit SOC of the target hybrid vehicle, and the current upper-limit SOC of the target hybrid vehicle.

Step S202 includes: step S2021, when the current actual SOC of the power battery of the target hybrid vehicle is greater than or equal to the current upper-limit SOC, determining the first target SOC to be the current upper-limit SOC; step S2022, when the current actual SOC of the power battery of the target hybrid vehicle is less than or equal to the current lower-limit SOC, determining the first target SOC to be the current lower-limit SOC; step S2023, when the current actual SOC is greater than the current lower-limit SOC and the current actual SOC is less than the current upper-limit SOC, determining the SOC variation rate corresponding to the current actual SOC according to a difference value corresponding to the current actual SOC and the real SOC variation amount corresponding to the current actual SOC, and determining the first target SOC according to the SOC variation rate, wherein the difference value corresponding to the current actual SOC is the difference between the current actual SOC and the actual SOC of the power battery acquired last time, and the real SOC variation amount is determined according to the voltage and current of the power battery and the capacity of the power battery within the period between the time when the current actual SOC is acquired and the time when the actual SOC of the power battery was acquired last time.

As an example, an actual SOC of the power battery is acquired every 10 seconds.

The difference value corresponding to the current actual SOC can be defined as the current actual SOC minus the actual SOC of the power battery acquired last time.

To calculate the real SOC variation amount corresponding to the current actual SOC, the product of the voltage of the power battery during the period between the time of the current actual SOC and the time when the actual SOC of the power battery was acquired last time and the current of the power battery during the period between the time of the current actual SOC and the time when the actual SOC of the power battery was acquired last time can be integrated to obtain a result. The capacity of the power battery is multiplied by a preset coefficient to obtain a product. The result is divided by the product to obtain the real SOC variation amount corresponding to the current actual SOC.

As an example, the following formula can be used to calculate the real SOC variation amount corresponding to the current actual SOC:

$$\Delta SOCact = \left(\int UI\right) / 3.6C$$

Where, $\Delta SOCact$ represents the real SOC variation amount corresponding to the current actual SOC, C represents the capacity of the power battery, U represents the voltage of the power battery within the period between the time when the current actual SOC is acquired and the time when the actual SOC of the power battery was acquired last time, and I represents the current of the power battery within the period between the time of the current actual SOC and the time when the actual SOC of the power battery was acquired last time.

As an example, to calculate the SOC variation rate corresponding to the current actual SOC, the absolute value of the result obtained by subtracting the difference value corresponding to the current actual SOC from the real SOC variation amount corresponding to the current actual SOC can be calculated. Then, this absolute value is divided by the real SOC variation amount corresponding to the current actual SOC to obtain the SOC variation rate corresponding to the current actual SOC.

That is, $SOC^3 = |\Delta SOCact - \Delta SOC| / \Delta SOCact$;
Where, $SOC^3$ represents the SOC variation rate corresponding to the current actual SOC, $\Delta SOC$ represents the difference value corresponding to the current actual SOC, and $\Delta SOCact$ represents the real SOC variation amount corresponding to the current actual SOC.

In step S2023, the step of determining the first target SOC according to the SOC variation rate includes: step S20231: when the current actual SOC is greater than the actual SOC of the power battery acquired last time, determining the first target SOC to be equal to a second target SOC, wherein the second target SOC is a target SOC of the power battery determined last time; step S20232: when the current actual SOC is less than the actual SOC of the power battery acquired last time and the SOC variation rate is less than an SOC variation rate threshold, determining the first target SOC to be equal to the current actual SOC; step S20233: when the current actual SOC is less than the actual SOC of the power battery acquired last time and the SOC variation rate is greater than or equal to the SOC variation rate threshold, determining the first target SOC according to the current discharge power boundary of the power battery and the discharge power boundary of the power battery acquired last time.

The discharge power boundary of the power battery is acquired periodically. As an example, a discharge power boundary of the power battery is acquired every 10 seconds. Each time the actual SOC of the power battery is acquired, the discharge power boundary of the power battery can be acquired simultaneously when the actual SOC of the power battery is acquired.

As an example, the SOC variation rate threshold is 1.5. If the current actual SOC of the power battery is greater than the actual SOC of the power battery acquired last time and the SOC variation rate corresponding to this current actual SOC is less than 1.5, the SOC variation can be determined to be an increase, the target SOC remains the current target unchanged, and the second target SOC is determined to be the first target SOC. If the current actual SOC of the power battery is greater than the actual SOC of the power battery acquired last time and the SOC variation rate is greater than or equal to 1.5, the SOC variation can be determined to be an abnormal increase, the target SOC still remains the current target unchanged, and the second target SOC is determined to be the first target SOC. If the current actual SOC is less than the actual SOC of the power battery acquired last time and the SOC variation rate is less than 1.5, the SOC variation can be determined to be a decrease, and the first target SOC is equal to this current actual SOC. If the current actual SOC is less than the actual SOC of the power battery acquired last time and the SOC variation rate is greater than or equal to 1.5, the SOC variation can be determined to be an abnormal decrease, and the first target SOC is determined according to the current discharge power boundary of the power battery and the discharge power boundary of the power battery acquired last time.

Step S20233 may include: when the current discharge power boundary is the same as the discharge power boundary of the power battery acquired last time, determining the first target SOC to be equal to the current actual SOC; when the current discharge power boundary is less than the discharge power boundary of the power battery acquired last time, determining the first target SOC according to the second target SOC and the current actual SOC.

As an example, when the first target SOC is determined according to the second target SOC and the current actual SOC, the following formula can be used to calculate the first target SOC:

The first target SOC = (SOCtar - SOCact) * K + SOCact.

Where, SOCtar represents the second target SOC, SOCact represents the current actual SOC, and K represents the correction coefficient.

K can be related to the discharge power change rate corresponding to the current discharge power of the power battery. The magnitude of K can be inversely proportional to the magnitude of the discharge power change rate corresponding to the current discharge power of the power battery.

The discharge power of the power battery can be acquired periodically. Each time the actual SOC of the power battery is acquired, the discharge power of the power battery is acquired simultaneously when the actual SOC of the power battery is acquired.

The discharge power change rate corresponding to the current discharge power of the power battery can be defined as an absolute value of the difference between the current discharge power of the power battery and the discharge power acquired last time divided by the discharge power of the power battery acquired last time.

Embodiments of the present application further provide an apparatus for determining a target SOC of the power battery of a hybrid vehicle. This apparatus is configured to implement the above method embodiments and preferred implementation manners, and the contents that have been described will not be repeated redundantly. As used hereinafter, the term "module" can be a combination of software and/or hardware that implements a predetermined function. Although the apparatuses described in the following embodiments are preferably implemented in software, however, implementation in hardware or a combination of software and hardware is also possible and conceived.

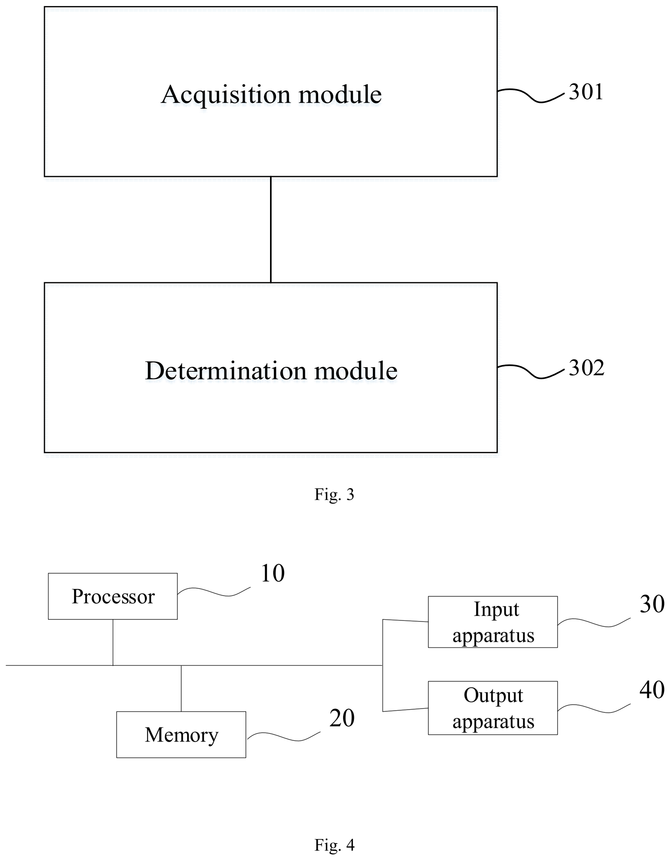

Please refer to Fig. 3 which shows a structural block diagram of an apparatus for determining the target SOC of the power battery of a hybrid vehicle provided in the embodiments of the present application. The apparatus for determining the target SOC of the power battery of a hybrid vehicle includes:

an acquisition module 301 configured to acquire current associated information and determine a current lower-limit state of charge (SOC) and a current upper-limit SOC according to the current associated information, wherein the current associated information includes at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (SOH) of the power battery; and

a determination module 302 configured to determine a first target SOC of the power battery according to a current actual SOC, the current lower-limit SOC, and the current upper-limit SOC of the power battery.

In a possible embodiment, the acquisition module 301 is further configured to: determine a base value of the current lower-limit SOC and a base value of the current upper-limit SOC according to the current ambient temperature and the current battery temperature; determine a correction value of the current lower-limit SOC and a correction value of the current upper-limit SOC according to the current altitude, the current slope gradient, and the current SOH; and determine the current lower-limit SOC and the current upper-limit SOC according to the base value of the current lower-limit SOC, the base value of the current upper-limit SOC, the correction value of the current lower-limit SOC, and the correction value of the current upper-limit SOC.

In a possible embodiment, the acquisition module 301 is further configured to determine a minimum value between the current ambient temperature and the current battery temperature; determine the base value of the current lower-limit SOC according to the minimum value and a first table, wherein the first table includes base values of the lower-limit SOC corresponding to each of a plurality of preset temperatures; and determine the base value of the current upper-limit SOC according to the minimum value and a second table, wherein the second table includes base values of the upper-limit SOC corresponding to each of a plurality of preset temperatures.

In a possible embodiment, the acquisition module 301 is further configured to: look up a third table for a first correction value of lower-limit SOC corresponding to the current altitude and the current slope gradient, wherein the third table includes first correction values of lower-limit SOC corresponding to each of the plurality of preset combinations of preset altitude and preset slope gradient; look up a fourth table for a second correction value of lower-limit SOC corresponding to the current SOH, wherein the fourth table includes second correction values of lower-limit SOC corresponding to each of the plurality of preset SOHs; determine the correction value of the current lower-limit SOC according to the first correction value of lower-limit SOC corresponding to the current altitude and the current slope gradient and the second correction value of lower-limit SOC corresponding to the current SOH; and look up a fifth table for a correction value of upper-limit SOC corresponding to the current SOH, and determine the correction value of the current upper-limit SOC to be the correction value of upper-limit SOC corresponding to the current SOH, wherein the fifth table includes correction values of upper-limit SOC corresponding to each of a plurality of preset SOHs.

In a possible embodiment, the acquisition module 301 is further configured to: determine the current lower-limit SOC to be the sum of the base value of the current lower-limit SOC and the correction value of the current lower-limit SOC; and determine the current upper-limit SOC to be the sum of the base value of the current upper-limit SOC and the correction value of the current upper-limit SOC.

In a possible embodiment, the determination module 302 is further configured to: when the current actual SOC is greater than or equal to the current upper-limit SOC, determine the first target SOC to be the current upper-limit SOC; when the current actual SOC is less than or equal to the current lower-limit SOC, determine the first target SOC to be the current lower-limit SOC; and when the current actual SOC is greater than the current lower-limit SOC and the current actual SOC is less than the current upper-limit SOC, determine an SOC variation rate corresponding to the current actual SOC according to a difference value corresponding to the current actual SOC and a real SOC variation amount corresponding to the current actual SOC, and determine the first target SOC according to the SOC variation rate, wherein the difference value is a difference between the current actual SOC and an actual SOC of the power battery acquired last time, and the real SOC variation amount is determined according to the voltage and current of the power battery and the capacity of the power battery within a period between the time when the current actual SOC is acquired and the time when the actual SOC of the power battery was acquired last time.

In a possible embodiment, the determination module 302 is further configured to: when the current actual SOC is greater than the actual SOC of the power battery acquired last time, determine the first target SOC to be equal to a second target SOC, wherein the second target SOC is a target SOC of the power battery determined last time; when the current actual SOC is less than the actual SOC of the power battery acquired last time and the SOC variation rate is less than an SOC variation rate threshold, determine the first target SOC to be equal to the current actual SOC; and when the current actual SOC is less than the actual SOC of the power battery acquired last time and the SOC variation rate is greater than or equal to the SOC variation rate threshold, determine the first target SOC according to a current discharge power boundary of the power battery and a discharge power boundary of the power battery acquired last time.

In a possible embodiment, the determination module 302 may be further configured to: when the current discharge power boundary is the same as the discharge power boundary of the power battery acquired last time, determine the first target SOC to be equal to the current actual SOC; and when the current discharge power boundary is less than the discharge power boundary of the power battery acquired last time, determine the first target SOC according to the second target SOC and the current actual SOC.

The apparatus in the embodiments of the present application is presented in the form of a functional unit. The functional unit herein refers to an ASIC (Application Specific Integrated Circuit) circuit, a processor and a memory that execute one or more software or fixed programs, and/or other devices that can provide the above functions.

Please refer to Fig. 4. Fig. 4 is a schematic diagram of a hardware structure of a hybrid vehicle provided in the embodiments of the present application. The hybrid vehicle includes: one or more processors 10, a memory 20, and interfaces for connecting various components, and the interfaces include high-speed interfaces and low-speed interfaces. The components are communicatively connected with each other using different buses and can be mounted on a common motherboard or can be mounted in other ways as needed. The processor can process instructions executed within the hybrid vehicle, including instructions stored in the memory or on the memory for displaying graphical information of the GUI on an external input/output apparatus (such as a display device coupled to the interface). In some optional embodiments, a plurality of processors and/or a plurality of buses can be used together with a plurality of memories if necessary. Similarly, a plurality of vehicles can be connected, and each device provides some necessary operations (for example, as a server array, a group of blade servers, or a multi-processor system).

The processor 10 may be a central processing unit, a network processor, or a combination thereof. The processor 10 may further include a hardware chip. The above hardware chip may be an application-specific integrated circuit, a programmable logic device, or a combination thereof. The above programmable logic device may be a complex programmable logic device, a field-programmable gate array, a generic array logic, or any combination thereof.

The memory 20 stores instructions executable by at least one processor 10, such that the at least one processor 10 executes the method shown in the above embodiments.

The memory 20 may include a program storage area and a data storage area, wherein the program storage area can store an operating system and application programs required for at least one function; and the data storage area can store data created according to the use of the vehicle, etc. In addition, the memory 20 may include a high-speed random-access memory and may also include non-transitory memories, such as at least one magnetic disk storage device, a flash memory device, or other non-transitory solid-state storage devices. In some optional embodiments, the memory 20 may optionally include memories remotely located relative to the processor 10, and these remote memories can be connected to the hybrid vehicle via a network. Examples of the above network include, but are not limited to, the Internet, an intranet, a local area network, a mobile communication network, and combinations thereof.

The memory 20 may include a volatile memory, such as a random-access memory; the memory may also include a non-volatile memory, such as a flash memory, a hard disk or a solid-state drive; and the memory 20 may also include a combination of the above types of memories.

The hybrid vehicle further includes an input apparatus 30 and an output apparatus 40. The processor 10, the memory 20, the input apparatus 30, and the output apparatus 40 may be connected via a bus or in other ways.

The input apparatus 30 can receive input numerical or character information and generate key signal inputs related to user settings and function control of the hybrid vehicle, such as a touch screen, a keypad, a mouse, a trackpad, a touchpad, a pointing stick, one or more mouse buttons, a trackball, a joystick, etc. The output apparatus 40 may include a display device, an auxiliary lighting device (e.g., an LED), a tactile feedback device (e.g., a vibration motor), etc. The above display device includes, but is not limited to, a liquid crystal display, a light-emitting diode, a display, and a plasma display. In some optional embodiments, the display device may be a touch screen.

The hybrid vehicle also includes a communication interface for the hybrid vehicle to communicate with other devices or communication networks.

The embodiments of the present application also provide a computer-readable storage medium. The methods according to the embodiments of the present application may be implemented in hardware or firmware, or as a computer code that can be recorded on a storage medium, downloaded over a network, stored on a remote storage medium or a non-transitory machine-readable storage medium, and stored on a local storage medium. Therefore, the methods described herein may be stored on a storage medium using a general-purpose computer, a dedicated processor, or programmable or dedicated hardware. The storage medium can be a magnetic disk, an optical disk, a read-only memory, a random-access memory, a flash memory, a hard disk, a solid-state drive, etc. Further, the storage medium can also include a combination of the above types of memories. It can be understood that a computer, a processor, a microprocessor controller, or programmable hardware includes a storage component that can store or receive software or computer code. When the software or computer code is accessed and executed by the computer, the processor, or the hardware, the method shown in the above embodiments is implemented.

The above embodiments are merely preferred embodiments provided to fully illustrate the present application, and the protection scope of the present application is not limited thereto. Any equivalent substitutions or alterations made by those skilled in the art on the basis of the present application shall all fall within the protection scope of the present application.

**Claims**

**1.** A method for determining a target SOC of a power battery of a hybrid vehicle, comprising:

acquiring current associated information, and determining a current lower-limit state of charge (SOC) and a current upper-limit SOC according to the current associated information, wherein the current associated information comprises at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (SOH) of the power battery; and determining a first target SOC of the power battery according to a current actual SOC, the current lower-limit SOC, and the current upper-limit SOC of the power battery.

2. The method according to claim 1, wherein the step of determining a current lower-limit SOC and a current upper-limit SOC according to the current associated information comprises:

determining a base value of the current lower-limit SOC and a base value of the current upper-limit SOC according to the current ambient temperature and the current battery temperature; determining a correction value of the current lower-limit SOC and a correction value of the current upper-limit SOC according to the current altitude, the current slope gradient, and the current SOH; and determining the current lower-limit SOC and the current upper-limit SOC according to the base value of the current lower-limit SOC, the base value of the current upper-limit SOC, the correction value of the current lower-limit SOC, and the correction value of the current upper-limit SOC.

3. The method according to claim 2, wherein the step of determining a base value of the current lower-limit SOC and a base value of the current upper-limit SOC according to the current ambient temperature and the current battery temperature comprises:

determining a minimum value between the current ambient temperature and the current battery temperature; determining the base value of the current lower-limit SOC according to the minimum value and a first table, wherein the first table includes base values of the lower-limit SOC corresponding to each of a plurality of preset temperatures; and determining the base value of the current upper-limit SOC according to the minimum value and a second table, wherein the second table includes base values of the upper-limit SOC corresponding to each of a plurality of preset temperatures.

4. The method according to claim 2, wherein the step of determining a correction value of the current lower-limit SOC and a correction value of the current upper-limit SOC according to the current altitude, the current slope gradient, and the current SOH comprises:

looking up a third table for a first correction value of lower-limit SOC corresponding to the current altitude and the current slope gradient, wherein the third table includes first correction values of lower-limit SOC corresponding to each of a plurality of preset combinations of preset altitude and preset slope gradient; looking up a fourth table for a second correction value of lower-limit SOC corresponding to the current SOH, wherein the fourth table includes second correction values of lower-limit SOC corresponding to each of a plurality of preset SOHs; determining the correction value of the current lower-limit SOC according to the first correction value of lower-limit SOC corresponding to the current altitude and the current slope gradient and the second correction value of lower-limit SOC corresponding to the current SOH; and looking up a fifth table for a correction value of upper-limit SOC corresponding to the current SOH, and determining the correction value of the current upper-limit SOC to be the correction value of upper-limit SOC corresponding to the current SOH, wherein the fifth table includes correction values of upper-limit SOC corresponding to each of a plurality of preset SOHs.

5. The method according to claim 2, wherein the step of determining the current lower-limit SOC and the current upper-limit SOC according to the base value of the current lower-limit SOC, the base value of the current upper-limit SOC, the correction value of the current lower-limit SOC, and the correction value of the current upper-limit SOC comprises:

determining the current lower-limit SOC to be the sum of the base value of the current lower-limit SOC and the correction value of the current lower-limit SOC; and determining the current upper-limit SOC to be the sum of the base value of the current upper-limit SOC and the correction value of the current upper-limit SOC.

6. The method according to any one of claims 1 to 5, wherein the step of determining a first target SOC of the power battery according to a current actual SOC, the current lower-limit SOC, and the current upper-limit SOC of the power battery comprises:

when the current actual SOC is greater than or equal to the current upper-limit SOC, determining the first target SOC to be the current upper-limit SOC;
when the current actual SOC is less than or equal to the current lower-limit SOC, determining the first target SOC to be the current lower-limit SOC; and
when the current actual SOC is greater than the current lower-limit SOC and the current actual SOC is less than the current upper-limit SOC, determining an SOC variation rate corresponding to the current actual SOC according to a difference value corresponding to the current actual SOC and a real SOC variation amount corresponding to the current actual SOC, and determining the first target SOC according to the SOC variation rate, wherein the difference value is a difference between the current actual SOC and an actual SOC of the power battery acquired last time, and the real SOC variation amount is determined according to the voltage and current of the power battery and the capacity of the power battery within a period between the time when the current actual SOC is acquired and the time when the actual SOC of the power battery was acquired last time.

7. The method according to claim 6, wherein the step of determining the first target SOC according to the SOC variation rate comprises:

when the current actual SOC is greater than the actual SOC of the power battery acquired last time, determining the first target SOC to be equal to a second target SOC, wherein the second target SOC is a target SOC of the power battery determined last time;
when the current actual SOC is less than the actual SOC of the power battery acquired last time and the SOC variation rate is less than an SOC variation rate threshold, determining the first target SOC to be equal to the current actual SOC; and
when the current actual SOC is less than the actual SOC of the power battery acquired last time and the SOC variation rate is greater than or equal to the SOC variation rate threshold, determining the first target SOC according to a current discharge power boundary of the power battery and a discharge power boundary of the power battery acquired last time.

8. The method according to claim 7, wherein the step of determining the first target SOC according to a current discharge power boundary of the power battery and a discharge power boundary of the power battery acquired last time comprises:

when the current discharge power boundary is the same as the discharge power boundary of the power battery acquired last time, determining the first target SOC to be equal to the current actual SOC; and
when the current discharge power boundary is less than the discharge power boundary of the power battery acquired last time, determining the first target SOC according to the second target SOC and the current actual SOC.

9. An apparatus for determining a target SOC of a power battery of a hybrid vehicle, wherein the apparatus is installed on the hybrid vehicle, and the apparatus comprises:

an acquisition module configured to acquire current associated information and determine a current lower-limit state of charge (SOC) and a current upper-limit SOC according to the current associated information, wherein the current associated information comprises at least part of the following items: the current altitude of a location where a target hybrid vehicle is currently located, the current slope gradient of a road surface where the target hybrid vehicle is currently located, the current ambient temperature of the environment where the target hybrid vehicle is currently located, the current battery temperature of the power battery of the target hybrid vehicle, and the current state of health (SOH) of the power battery; and
a determination module configured to determine a first target SOC of the power battery according to a current actual SOC, the current lower-limit SOC, and the current upper-limit SOC of the power battery.

10. The apparatus according to claim 9, wherein the acquisition module is further configured to: determine a base value of the current lower-limit SOC and a base value of the current upper-limit SOC according to the current ambient temperature and the current battery temperature; determine a correction value of the current lower-limit SOC and a correction value of the current upper-limit SOC according to the current altitude, the current slope gradient, and the current SOH; and determine the current lower-limit SOC and the current upper-limit SOC according to the base value of the current lower-limit SOC, the base value of the current upper-limit SOC, the correction value of the current lower-limit SOC, and the correction value of the current upper-limit SOC.

11. The apparatus according to claim 10, wherein the acquisition module is further configured to: determine a minimum value between the current ambient temperature and the current battery temperature; determine the base value of the current lower-limit SOC according to the minimum value and a first table, wherein the first table includes base values of the lower-limit SOC corresponding to each of a plurality of preset temperatures; and determine the base value of the current upper-limit SOC according to the minimum value and a second table, wherein the second table includes base values of the upper-limit SOC corresponding to each of a plurality of preset temperatures.

12. The apparatus according to claim 10, wherein the acquisition module is further configured to: look up a third table for a first correction value of lower-limit SOC corresponding to the current altitude and the current slope gradient, wherein the third table includes first correction values of lower-limit SOC corresponding to each of a plurality of preset combinations of preset altitude and preset slope gradient; look up a fourth table for a second correction value of lower-limit SOC corresponding to the current SOH, wherein the fourth table includes second correction values of lower-limit SOC corresponding to each of a plurality of preset SOHs; determine the correction value of the current lower-limit SOC according to the first correction value of lower-limit SOC corresponding to the current altitude and the current slope gradient and the second correction value of lower-limit SOC corresponding to the current SOH; and look up a fifth table for a correction value of upper-limit SOC corresponding to the current SOH, and determine the correction value of the current upper-limit SOC to be the correction value of upper-limit SOC corresponding to the current SOH, wherein the fifth table includes correction values of upper-limit SOC corresponding to each of a plurality of preset SOHs.

13. The apparatus according to claim 10, wherein the acquisition module is further configured to: determine the current lower-limit SOC to be the sum of the base value of the current lower-limit SOC and the correction value of the current lower-limit SOC; and determine the current upper-limit SOC to be the sum of the base value of the current upper-limit SOC and the correction value of the current upper-limit SOC.

14. The apparatus according to any one of claims 9-13, wherein the determination module is further configured to: when the current actual SOC is greater than or equal to the current upper-limit SOC, determine the first target SOC to be the current upper-limit SOC; when the current actual SOC is less than or equal to the current lower-limit SOC, determine the first target SOC to be the current lower-limit SOC; and when the current actual SOC is greater than the current lower-limit SOC and the current actual SOC is less than the current upper-limit SOC, determine an SOC variation rate corresponding to the current actual SOC according to a difference value corresponding to the current actual SOC and a real SOC variation amount corresponding to the current actual SOC, and determine the first target SOC according to the SOC variation rate, wherein the difference value is a difference between the current actual SOC and an actual SOC of the power battery acquired last time, and the real SOC variation amount is determined according to the voltage and current of the power battery and the capacity of the power battery within a period between the time when the current actual SOC is acquired and the time when the actual SOC of the power battery was acquired last time.

15. The apparatus according to claim 14, wherein the determination module is further configured to: when the current actual SOC is greater than the actual SOC of the power battery acquired last time, determine the first target SOC to be equal to a second target SOC, wherein the second target SOC is a target SOC of the power battery determined last time; when the current actual SOC is less than the actual SOC of the power battery acquired last time and the SOC variation rate is less than an SOC variation rate threshold, determine the first target SOC to be equal to the current actual SOC; and when the current actual SOC is less than the actual SOC of the power battery acquired last time and the SOC variation rate is greater than or equal to the SOC variation rate threshold, determine the first target SOC according to a current discharge power boundary of the power battery and a discharge power boundary of the power battery acquired last time.

16. The apparatus according to claim 15, wherein the determination module is further configured to: when the current discharge power boundary is the same as the discharge power boundary of the power battery acquired last time, determine the first target SOC to be equal to the current actual SOC; and when the current discharge power boundary is less than the discharge power boundary of the power battery acquired last time, determine the first target SOC according to the second target SOC and the current actual SOC.

17. A hybrid vehicle, comprising:
a memory and a processor, wherein the memory and the processor are communicatively connected with each other, computer instructions are stored in the memory, and the processor is configured to execute the method according to any one of claims 1 to 8 by executing the computer instructions.

18. A computer-readable storage medium, wherein the computer-readable storage medium has computer instructions stored therein, and the computer instructions are configured to enable a computer to execute the method according to any one of claims 1 to 8.

Acquire current associated information, and determine a current lower-limit SOC and a current upper-limit SOC according to the current associated information — S101

Determine a first target SOC of the power battery of the target hybrid vehicle according to the current actual SOC of the power battery of the target hybrid vehicle, the current lower-limit SOC of the target hybrid vehicle, and the current upper-limit SOC of the target hybrid vehicle — S102

Fig. 1

Acquire the current associated information, determine the corresponding base value according to the current ambient temperature and current battery temperature in the current associated information, determine the corresponding correction value according to the current altitude, current slope gradient, and current SOH in the current associated information, and determine the current lower-limit SOC and the current upper-limit SOC according to the corresponding base value and corresponding correction value

S201

Determine the first target SOC of the power battery of the target hybrid vehicle according to the current actual SOC of the power battery of the target hybrid vehicle, the current lower-limit SOC of the target hybrid vehicle, and the current upper-limit SOC of the target hybrid vehicle

S202

Fig. 2

Acquisition module 301

Determination module 302

Fig. 3

Processor 10

Input apparatus 30

Output apparatus 40

Memory 20

Fig. 4

## INTERNATIONAL SEARCH REPORT

International application No.

**PCT/CN2024/076063**

| A. | CLASSIFICATION OF SUBJECT MATTER |
|---|---|

B60L58/12(2019.01)i;  B60W40/00(2006.01)i;  G01R31/382(2019.01)i

According to International Patent Classification (IPC) or to both national classification and IPC

| B. | FIELDS SEARCHED |
|---|---|

Minimum documentation searched (classification system followed by classification symbols)

IPC:B60L,B60W,G01R

Documentation searched other than minimum documentation to the extent that such documents are included in the fields searched

Electronic data base consulted during the international search (name of data base and, where practicable, search terms used)

CNTXT, ENTXTC, DWPI, VEN: 电池, 混动, SOC, 上限, 下限, 充电, 温度, hybrid electric, battery, limit, charge, temperature

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 115113059 A (GREAT WALL MOTOR CO., LTD.) 27 September 2022 (2022-09-27) description, paragraphs 5-168, and figures 1-3 | 1-2, 5, 9-10, 13, 17-18 |
| Y | CN 105691383 A (HYUNDAI MOTOR CO.; KIA MOTORS CORP.) 22 June 2016 (2016-06-22) description, paragraphs 65-101, and figures 1-7 | 1-2, 5, 9-10, 13, 17-18 |
| A | CN 112051505 A (SVOLT ENERGY TECHNOLOGY CO., LTD.) 08 December 2020 (2020-12-08) entire document | 1-18 |
| A | CN 112677764 A (BEIJING NEW ENERGY VEHICLE TECHNOLOGY INNOVATION CENTER CO., LTD.) 20 April 2021 (2021-04-20) entire document | 1-18 |
| A | CN 114325413 A (EVE ENERGY CO., LTD.) 12 April 2022 (2022-04-12) entire document | 1-18 |
| A | CN 115158093 A (CHINA FAW CO., LTD.) 11 October 2022 (2022-10-11) entire document | 1-18 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 May 2024** | **02 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| PCT/CN2024/076063 |

### C.    DOCUMENTS CONSIDERED TO BE RELEVANT

| Category* | Citation of document, with indication, where appropriate, of the relevant passages | Relevant to claim No. |
|---|---|---|
| A | KR 20210002908 A (HYUNDAI MOTOR CO., LTD.; KIA MOTORS CORP.) 11 January 2021 (2021-01-11)<br>    entire document | 1-18 |
| A | US 2021061120 A1 (HYUNDAI MOTOR CO., LTD.; KIA MOTORS CORP.) 04 March 2021 (2021-03-04)<br>    entire document | 1-18 |
| A | WO 2023116519 A1 (GREAT WALL MOTOR CO., LTD.) 29 June 2023 (2023-06-29)<br>    entire document | 1-18 |

Form PCT/ISA/210 (second sheet) (July 2022)

## INTERNATIONAL SEARCH REPORT
### Information on patent family members

International application No.

**PCT/CN2024/076063**

| Patent document cited in search report | | | Publication date (day/month/year) | Patent family member(s) | | | Publication date (day/month/year) |
|---|---|---|---|---|---|---|---|
| CN | 115113059 | A | 27 September 2022 | None | | | |
| CN | 105691383 | A | 22 June 2016 | EP | 3069920 | A1 | 21 September 2016 |
| | | | | EP | 3069920 | B1 | 20 October 2021 |
| | | | | KR | 20160071211 | A | 21 June 2016 |
| | | | | KR | 101655609 | B1 | 07 September 2016 |
| | | | | US | 2016167641 | A1 | 16 June 2016 |
| | | | | US | 9834199 | B2 | 05 December 2017 |
| CN | 112051505 | A | 08 December 2020 | None | | | |
| CN | 112677764 | A | 20 April 2021 | None | | | |
| CN | 114325413 | A | 12 April 2022 | None | | | |
| CN | 115158093 | A | 11 October 2022 | None | | | |
| KR | 20210002908 | A | 11 January 2021 | US | 2021001746 | A1 | 07 January 2021 |
| | | | | US | 11084395 | B2 | 10 August 2021 |
| | | | | DE | 102019218370 | A1 | 07 January 2021 |
| US | 2021061120 | A1 | 04 March 2021 | KR | 20210026400 | A | 10 March 2021 |
| | | | | US | 11505078 | B2 | 22 November 2022 |
| WO | 2023116519 | A1 | 29 June 2023 | None | | | |

Form PCT/ISA/210 (patent family annex) (July 2022)